# EUROPEAN PATENT SPECIFICATION

(11) **EP 2 570 896 B1**
(45) Date of publication and mention of the grant of the patent: **14.06.2017**
(21) Application number: 12006472.0
(22) Date of filing: 14.09.2012
(51) Int. Cl.: G06F 3/041, G06F 3/044

(54) **Electronic device and method for driving a touch sensor thereof**
Elektronische Vorrichtung und Antriebsverfahren für einen dazugehörigen Berührungssensor
Dispositif électronique et procédé de commande d'un capteur tactile associé

(30) Priority: 16.09.2011 US 201161535377 P; 13.09.2012 US 201213615562
(43) Date of publication of application: 20.03.2013
(73) Proprietor: HTC Corporation, Taoyuan City 330 (TW)
(72) Inventor: Chen, Te-Mu, Taoyuan City Taoyuan County 330 (TW); Lo, Pi-Lin, Taoyuan City Taoyuan County 330 (TW); Liu, Chen-Hsi, Taoyuan City Taoyuan County 330 (TW); Hsueh, Yi-Fan, Taoyuan City Taoyuan County 330 (TW)
(74) Representative: Emde, Eric

(56) References cited:
- US-A1- 2009 009 483
- US-A1- 2010 214 259
- US-A1- 2010 253 638
- US-A1- 2010 295 824
- US-A1- 2011 007 019

## Description

### BACKGROUND DISCLOSURE

### Field of the Disclosure

The present disclosure relates to a touch sensor of an electronic device. More particularly, the present disclosure relates to an electronic device and a method for scanning a touch sensor of the electronic device.

### Description of the Related Art

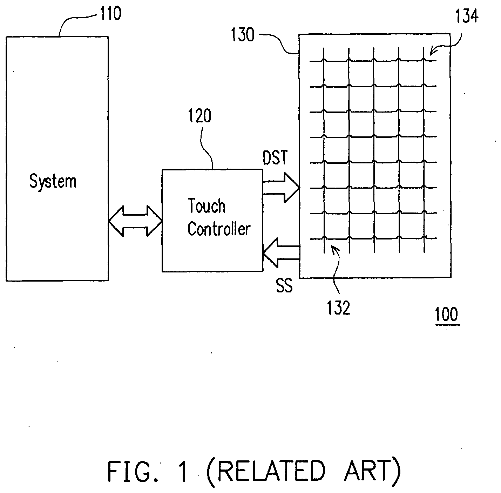

Fig. 1 is a schematic diagram showing a conventional electronic device 100 including a system 110, a touch controller 120 and a capacitive touch sensor 130. The system 110 is the main system of the electronic device 100. The capacitive touch sensor 130 includes a set of drive lines and a set of sense lines. Each location where a drive line crosses a sense line is a sensing element of the capacitive touch sensor 130. For example, two sensing elements of the capacitive touch sensor 130 are marked as 132 and 134, respectively. Each sensing element is a sensor for sensing touch or proximity of the user.

When a user performs some operations on the capacitive touch sensor 130, the touch controller 120 may detect resultant touch events by scanning the capacitive touch sensor 130. The touch controller 120 scans the capacitive touch sensor 130 by sending touch drive signal DST to the drive lines of the capacitive touch sensor 130. The touch drive signal DST charges the sensing elements of the capacitive touch sensor 130 and the sensing elements generate sense signals SS in response. Next, the touch controller 120 receives the sense signals SS from the sense lines of the capacitive touch sensor 130. The touch controller 120 analyzes the sense signals SS to determine the locations of the touch events. The system 110 may perform predetermined functions of the electronic device 100 according to the touch events.

In the scanning of a capacitive touch sensor, noises often affect the sense signals and cause erroneous results of the detection of touch events. The noise is always present and is always a problem. For example, many electronic devices, such as smart phones and tablet computers, are equipped with touch displays that consist of touch sensors and liquid crystal modules (LCMs). An LCM generates a lot of noises when the polarities of its pixels are inverted.

US 2010/253638 A1 discloses a gate driver circuit for switching gate line voltage supplies between display and touch modes. The circuit can include one or more switches configured to switch one or more gate lines of an integrated touch sensitive display between a display mode and a touch mode. During touch mode, the circuit can be configured to switch the gate lines to connect to a more stable voltage supply. The circuit can also be configured to reduce or eliminate interference from the display circuitry to the touch circuitry that could affect touch sensing. During display mode, the circuit can be configured to switch the gate lines to connect to a fluctuating voltage supply.

US 2009/009483 A1 discloses a touch controller for controlling a touch sensor panel. The touch controller includes a plurality of sense channels that receive sensor signals from the touch sensor panel, a drive system that generates a plurality of stimulation signals based on a supply voltage on the order of digital logic level supply voltages, the stimulation signals for simultaneously stimulating multiple drive lines of the touch sensor panel, and a channel controller that controls the sense channels and the drive system. The plurality of sense channels, the drive system, and the channel controller are formed on a single chip.

US 2010/214259 A1 discloses a sensor which is arranged to determine the presence of an object from a change in a capacitance of a sensing element. The sensor includes a capacitance measurement circuit operable to perform measurement cycles to measure a capacitance of the sensing element, and a controller circuit. The control circuit is operable to detect a periodic noise signal induced on the sensing element, to determine a first part, of a repeating pattern of the periodic noise signal, which causes a change in an amount of charge present on the sensing element, which affects the measurement of the capacitance of the sensing element by the capacitance measurement circuit, to determine a second part of the repeating pattern of the periodic noise signal, which does not cause a change in the amount of charge present on the sensing element, and to control the measurement cycles of the capacitance measurement circuit to perform the measurement cycles during the second part of the periodic noise signal and not to perform the measurement cycles during the first part of the periodic noise signal.

### SUMMARY

Accordingly, the present disclosure is directed to an electronic device and a method for driving a touch sensor integrated into a display module in an electronic device. The electronic device and the method may determine a mode for applying a drive signal to the touch sensor and change the mode in order to avoid bursts of the noises.

According to an embodiment of the present invention, an electronic device is provided as set forth in claim 1.

According to an alternative device, the control circuitry comprises a sense circuitry, and a drive circuitry. The sense circuitry is coupled to the touch sensor and configured to determine the one of the first mode and the second mode for driving the touch sensor, and configured to detect the sense signal from the touch sensor. The drive circuitry is coupled to the sense circuitry, the display module and the touch sensor and configured to apply a display drive signal for driving the display module and apply the touch drive signal for driving the touch sensor at the one determined mode.

According to another embodiment of the present invention, the control circuitry may comprise a sense circuitry, a process unit and a drive circuitry. The sense circuitry is coupled to the touch sensor, the process unit and the drive circuitry and configured to detect the sense signal from the touch sensor. The process unit is configured to determine the one of the first mode and the second mode for driving the touch sensor. The drive circuitry is coupled to the touch sensor and the process unit and configured to apply the display drive signal for driving the display module and apply the touch drive signal for driving the touch sensor. When the process unit determined that an image to be displayed on display module results in a noise level greater than a predetermined level for the touch sensor, the process unit determines to drive the touch sensor at the first mode. Whereas, when it is determined that the image to be displayed on display module does not result in the noise level for the touch sensor greater than the predetermined level for the touch sensor, the process unit determines to drive the touch sensor at the second mode.

According to another embodiment of the present invention, a method for driving a touch sensor integrated into a display module in an electronic device is provided as set forth in claim 8.

According to an alternative method, the method further comprises: applying the touch drive signal to the touch sensor within a display period; applying the touch drive signal to the touch sensor according to a first predetermined timing within the display period when the first mode is determined for driving the touch sensor; and applying the touch drive signal to the touch sensor according to a second predetermined timing within the display period when the second mode is determined for driving the touch sensor.

According to another alternative method, the method further comprises: applying the touch drive signal to the touch sensor at a first frequency within the display period when the first mode is determined for driving the touch sensor; and applying the touch drive signal to the touch sensor at a second frequency within the display period when the second mode is determined for driving the touch sensor.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the invention.
Fig. 1 is a schematic diagram showing a conventional electronic device.
Fig. 2A is a schematic diagram showing an electronic device according to an embodiment of the present invention.
Fig. 2B is a cross-sectional view of a display module with an in-cell capacitive touch sensor according to an embodiment of the present invention.
Fig. 2C is a flow chart showing a method for scanning a touch sensor integrated into a display module of an electronic device according to an embodiment of the present invention.
Fig. 3A is a schematic diagram showing an electronic device according to another embodiment of the present invention.
Fig. 3B is a flow chart showing a method for driving a touch sensor integrated into a display module of an electronic device according to another embodiment of the present invention.
Fig. 4A is a schematic diagram showing an electronic device according to another embodiment of the present invention.
Fig. 4B is a flow chart showing a method for driving a touch sensor integrated into a display module of an electronic device according to another embodiment of the present invention.
Fig. 5 to Fig. 7 are schematic diagrams showing driving a touch sensor integrated into a display module of an electronic device; Fig. 8 and Fig. 9 are schematic diagrams showing driving a touch sensor integrated into a display module of an electronic device according to embodiments of the present invention.
Fig. 10 is a schematic diagram showing an electronic device according to an embodiment of the present invention.
Fig. 11A and Fig. 11B are flow charts showing a method for driving a touch sensor integrated into a display module of an electronic device according to an embodiment of the present invention.
Fig. 11C is a schematic diagram showing pixel process periods of pixels or sub-pixels of a display module according to an embodiment of the present invention.
Fig. 11D and Fig. 11E are flow charts showing a method for driving a touch sensor integrated into a display module of an electronic device according to an embodiment of the present invention.

### DESCRIPTION OF THE EMBODIMENTS

Reference will now be made in detail to the present embodiments of the invention, examples of which are illustrated in the accompanying drawings. Wherever possible, the same reference numbers are used in the drawings and the description to refer to the same or like parts.

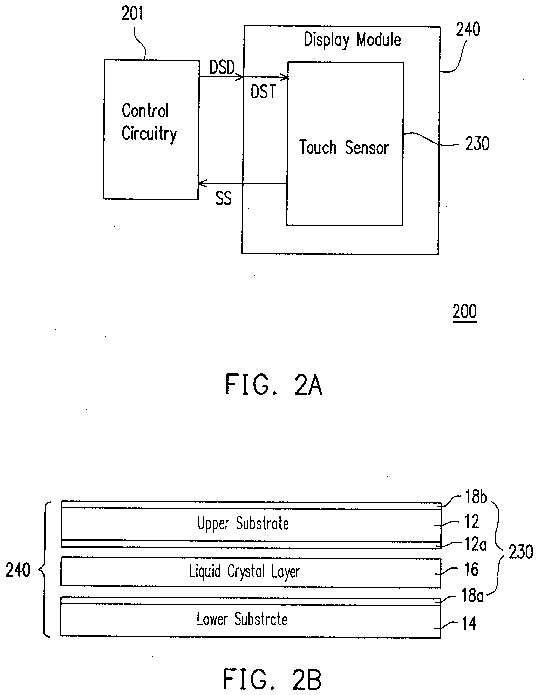

Fig. 2A is a schematic diagram illustrating an electronic device 200 according to an embodiment of the present invention. The electronic device 200 may be any electronic devices with a touch display, such as smart phones, personal digital assistants, tablet computers or notebook computers. An electronic device 200 comprises a display module 240, a touch sensor 230, which integrated into the display module 240, and a control circuitry 201. The display module 240 comprises a plurality of pixels or sub-pixels and a plurality of scan lines connected to the plurality of pixels or sub-pixels, and the control circuitry 201 is further configured to drive the pixels or sub-pixels through the use of scan lines during a display period. The display period includes a plurality of pixel process periods, during which the pixels or sub-pixels are driven, and a plurality of blank periods, during which no pixel or sub-pixel is driven. The control circuitry 201 is coupled to the touch sensor 230 and the display module 240 and configured to drive the touch sensor by a touch drive signal DST at either a first mode or a second mode and detect a sense signals SS from the touch sensor 230 when the touch sensor 230 is driven by the touch drive signal DST. In one embodiment, the touch drive signal DST is applied to drive the touch sensor 230 within the display period.

The display module 240 may be a liquid crystal module (LCM), OLED (organic light emitting diode) display module or transparent OLED display module. The touch sensor 230 may be an in-cell capacitive touch sensor which may includes a plurality of sensing elements coupled to the control circuitry 201. Each sensing element is a sensor for sensing the touch or the proximity of a conductive object such as a stylus or a finger of the user. These touch sensor 230 may be integrated into the display module 240. The sensing elements of the touch sensor may share or use a Vcom circuitry for the display module to charge or drive the sensing elements. Although the touch sensor 230 is an in-cell capacitive touch sensor, the present disclosure is not limited to in-cell capacitive touch sensors only. The present disclosure is applicable to any touch sensor that is integrated into a display module, including on-cell touch sensor. In other words, the display module 240 may be an in-cell or on-cell display module.

As depicted in Fig. 2B, it is a cross-sectional view of the display module 240 with the in-cell capacitive touch sensor 230 according to an embodiment of the present invention. The display module 240 includes an upper substrate 12, a lower substrate 14 and a liquid crystal (LC) layer 16. The upper substrate 12 may be a color filter (CF) substrate with a color filter layer 12a, while the lower substrate 14 may be a thin-film transistor (TFT) array substrate with a TFT array 18a. The LC layer 16 is sandwiched between the two substrates 12 and 14. The display module 240 also includes the in-cell capacitive touch sensor 230 integrated into the display module 240. The touch sensor 230 has a first conductive layer 18a with drive line electrodes (not shown) formed on the upper surface of the lower substrate 14 for receiving drive signals, and a second conductive layer 18b with sense line electrodes (not shown) formed on the upper surface of the upper substrate 12 for providing sense signals. The sense signals are provided from the touch sensor 230 when the touch sensor 230 is driven. The sense signals may be generated by the touch or the proximity of one or more conductive objects to one or more sensing elements of the touch sensor 230. In this embodiment, the first conductive layer 18a is integrated into the TFT array 18a by using the gate lines of the TFT array 18a as the drive line electrodes of the first conductive layer 18a.

Please note that the positions of the first and second conductive layers 18a and 18b integrated into the LCM module are not limited in the present disclosure. For example, the first conductive layer 18a may also be formed on the lower surface of the upper substrate, and the two conductive layers 18a and 18b may be formed on the same layer so as to form a single-layer type sensor on the upper surface of the upper substrate. In another embodiment, the single-layer type sensor may be formed on the lower surface of the upper substrate.

According to above-mentioned embodiments of the present disclosure, the display module may be any type of LCM modules, e.g. IPS type, VA type, TN type, and etc. The display module structure may be implemented in IPS type LCM module, or in VA or TN type LCM module.

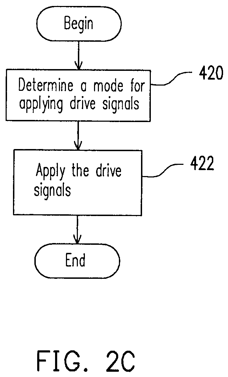

A method for driving a touch sensor integrated into a display module of an electronic device comprises the steps of driving the touch sensor by a touch drive signal at either a first mode or a second mode and detecting sense signals from the touch sensor when the touch sensor is driven by the touch drive signal. Please refer to Fig. 2C, which is a flow chart illustrating a method for driving a touch sensor, which is integrated into a display module in an electronic device according to an embodiment of the present disclosure. The method shown in Fig. 2C may be executed by the electronic device 200 shown in Fig. 2A. In step 420, the control circuitry 201 is coupled to the touch sensor 230 and the display module 240 and configured to drive the touch sensor 230 by a touch drive signal DST at either a first mode or a second mode and detect sense signals SS from the touch sensor 230 when the touch sensor 230 is driven by the touch drive signal. The control circuitry 201 is further configured to determine one of the first mode and the second mode for driving the touch sensor 230 based on a determination. The determination may be determined as the following examples. First example is related to noise level. The determination for driving the touch sensor 230 is to determine whether the sense signals SS has a noise level greater than a predetermined level. When the control circuitry 201 determines that the sense signals SS have the noise level greater than the predetermined level, the control circuitry 201 drives the touch sensor 230 at the first mode. When the control circuitry 201 determined that the sense signals SS do not have the noise level greater than the predetermined level, the control circuitry 201 drives the touch sensor 230 at the second mode. Second example is related to characteristic of the touch sensor 230. The determination for driving the touch sensor 230 is to determine a characteristic of the touch sensor. When it is determined that the touch sensor 230 has a first characteristic, the control circuitry 201 drives the touch sensor 230 at the first mode. When it is determined that the touch sensor 230 has a second characteristic, the control circuitry 201 drives the touch sensor at the second mode. The third example is related to the charge level of the touch sensor 230. The determination for driving the sensing element is to determine whether a charge level, which is determined based on the detected sense signal, of at least one of the sensing elements is lower than a predetermined charge level. When it is determined that the charge level is not lower than a predetermined charge level, the control circuitry 201 drives the touch sensor 230 at the first mode. When it is determined that the charge level is lower than a predetermined charge level, the control circuitry 201 drives the touch sensor 230 at the second mode. The fourth example is related to image to be displayed on the display module. The determination for driving the touch sensor 230 is to determine whether an image to be displayed on display module 240 results in a noise level greater than a predetermined level for touch sensor 230. When it is determined that the image to be displayed on display module 240 results the noise level greater than the predetermined level, the control circuitry 201 determines to drives the touch sensor 230 at the first mode. When it is determined that the image to be displayed on display module does not result the noise level for the touch sensor 230 greater than the predetermined level, the control circuitry to drives the touch sensor 230 at the second mode.

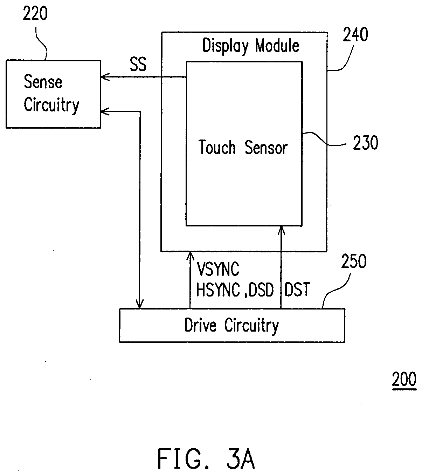

Fig. 3A is a schematic diagram illustrating another example an electronic device 200 according to an embodiment of the present disclosure. The electronic device 200 includes a display module 240 with a touch sensor 230 integrated into the display module 240, a drive circuitry 250 coupled to the display module 240 and the touch sensor 230, and a sense circuitry 220 coupled to the touch sensor 230 and the drive circuitry 250. The sense circuitry is configured to determine the one of the first mode and the second mode as a determined mode for driving the touch sensor, and configured to detect the sense signals from the touch sensor. The drive circuitry 250 is configured to apply the display drive signal DSD for driving the display module and apply the touch drive signal DST for driving the touch sensor at the determined mode.

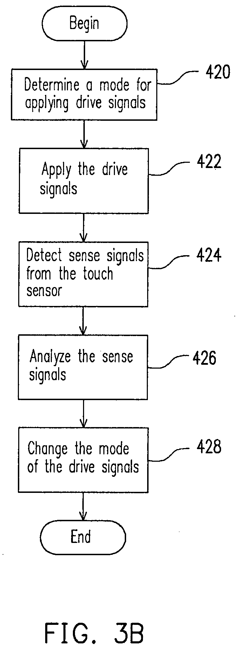

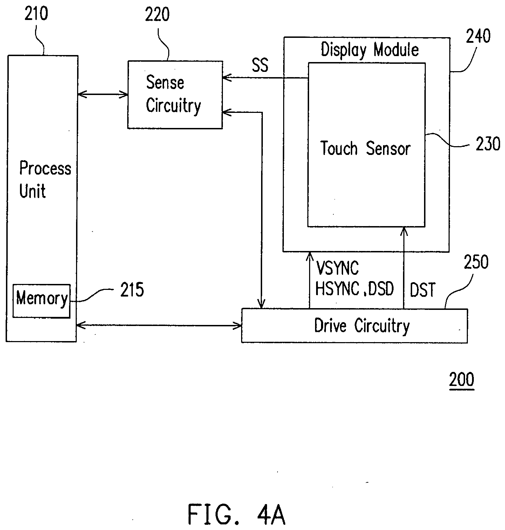

Fig. 3B is a flow chart illustrating a method for driving a touch sensor integrated into a display module of an electronic device according to another embodiment of the present disclosure. The method shown in Fig. 3B may be executed by the electronic device 200 shown in Fig. 3A. The In step 420, the sense circuitry 220 determines either a first or a second mode for the drive circuitry 250 to apply the drive signals. The drive signals in this embodiment, comprises the display drive signal DSD for the display module 240 and the touch drive signal DST for the touch sensor 230. In step 422, the drive circuitry 250 applies the display drive signal DSD to the display module 240 and applies the touch drive signal DST to the touch sensor 230. Steps 420 and 422 are the same as their counterparts in Fig. 4A. In step 424, the sense circuitry 220 may detect one or more sense signals SS from the touch sensor 230. In step 426, the sense circuitry 220 analyzes the sense signals SS. The electronic device 200 may execute one or more functions according to the one or more touch events. In step 428, the sense circuitry 220 may change from the first mode to the second mode for the drive circuitry 250 to apply the touch drive signal DST for driving the touch sensor 230. The sense circuitry 220 may determine to change the mode for the drive circuitry 250 to apply the touch drive signal DST for driving the touch sensor 230 when the sense circuitry 220 analyzes the sense signals SS and identifies at least one of the sense signals SS with a noise level greater than a predetermined value. One of the purposes of the change of the mode in step 428 is avoiding the noises interfering with the scanning of the touch sensor 230. The sense circuitry 220 is further configured to determine one of the first mode and the second mode for driving the touch sensor 230 based on a determination. The determination may be determined as the following examples. First example is related to noise level. The determination for driving the touch sensor 230 is to determine whether the sense signals SS has a noise level greater than a predetermined level. When the sense circuitry 220 determined that the sense signals have the noise level greater than the predetermined level, the sense circuitry 220 determines the first mode for the drive circuitry 250 to drives the touch sensor 230. When the sense circuitry 220 determined that the sense signals SS does not have the noise level greater than the predetermined level, the sense circuitry 220 determines to drives the touch sensor 230 at the second mode. Second example is related to characteristic of the touch sensor 230. The determination for driving the touch sensor 230 is to determine a characteristic of the touch sensor 230; wherein when it is determined that the touch sensor 230 has a first characteristic, the sense circuitry 220 determines to drive the touch sensor 230 at the first mode. When it is determined that the touch sensor 230 has a second characteristic, the sense circuitry 220 determines to drive the touch sensor 230 at the second mode. The third example is related to the charge level of the touch sensor 230. The determination for driving the sensing element is to determine whether a charge level, which is determined based on the detected sense signal, of at least one of the sensing elements is lower than a predetermined charge level. When the sense circuitry 220 determines that the charge level is not lower than a predetermined charge level, the sense circuitry 220 determines to drive the touch sensor 230 at the first mode. When the sense circuitry 220 determines that the charge level is lower than the predetermined charge level, the sense circuitry 220 determines to drive the touch sensor 230 at the second mode.

The aforementioned mode is related to the timing or the frequency to apply or send the touch drive signal DST to the touch sensor 230. When the control circuitry 201 determines the first mode for driving the touch sensor 230, the touch drive signal DST is applied to the touch sensor 230 according to a first predetermined timing within the display period. When the control circuitry 201 determines the second mode for driving the touch sensor 230, the touch drive signal DST is applied to the touch sensor 230 according to a second predetermined timing within the display period. The first predetermined timing may be different from the second predetermined timing. In order to switch the mode for driving the touch sensor 230, the sense circuitry 220 may send an instruction to control the drive circuitry 250 to change the timing or the frequency of the touch drive signal DST for driving the touch sensor 230. The sense circuitry 220 may adjust the timing of the touch drive signal DST for the touch sensor 230 by changing the mode for the drive circuitry 250 to apply the touch drive signal DST.

Fig. 4A is a schematic diagram showing the electronic device 200 according to another embodiment of the present disclosure. The electronic device 200 in Fig. 4A includes a display module 240 with a touch sensor 230 integrated into the display module 240, a drive circuitry 250 coupled to the display module 240 and the touch sensor 230, a process unit 210 coupled to the drive circuitry 250, and a sense circuitry 220 coupled to the touch sensor 230, the process unit 210 and the drive circuitry 250. The process unit 210 may include a memory 215 configured to store different modes to be selected in step 1110 for applying the touch drive signal DST for the touch sensor 230.

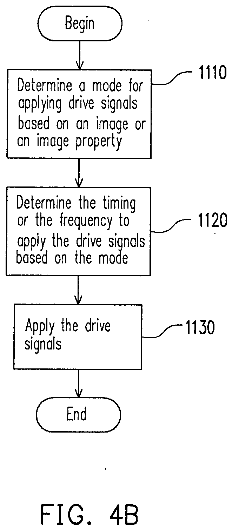

Fig. 4B is a flow chart showing a method for driving a touch sensor integrated into a display module of an electronic device according to an embodiment of the present disclosure. This method may be executed by the electronic device 200 as shown in Fig. 4A. In step 1110, the process unit 210 determines either a first mode or a second mode to apply the touch drive signal DST for the touch sensor 230 based on an image to be displayed on the display module 240 or an image property of the image such as histogram of the image. The image to be displayed on display module may result in a noise level greater than a predetermined level for touch sensor. When the process unit is determined that the image to be displayed on display module results in the noise level greater than the predetermined level, the process unit determines for the drive circuitry to drives the touch sensor at the first mode. When the process unit determined that the image to be displayed on display module does not result in the noise level for the touch sensor greater than the predetermined level, the process unit determines for the drive circuitry to drives the touch sensor at the second mode. In step 1120, the sense circuitry 220 instructs the driving circuitry 250 the timing or the frequency to apply the touch drive signal DST based on the mode. In other words, the timing or frequency to apply the touch drive signal DST is determined by the sense circuitry 220 and is implemented by the drive circuitry 250. In step 1130, the drive circuitry 250 applies the display drive signal DSD and DST for the display module 240 and the touch sensor 230.

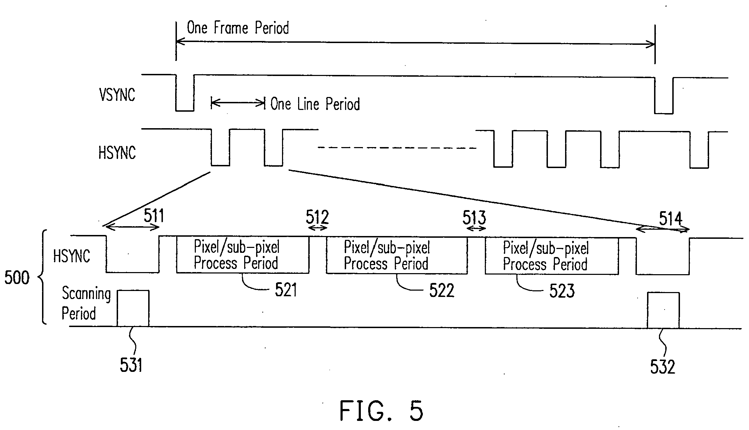

Fig. 5 is a schematic diagram showing the default mode 500 for sending the touch drive signal DST to scan the touch sensor 230 of the electronic device 200 according to an embodiment of the present disclosure. The default mode 500 may be used as the mode in step 420 or the mode in step 428. The drive circuitry 250 may scan the touch sensor 230 by applying the touch drive signal DST at the default mode 500.

As shown in Fig. 5, the period from the beginning of a pulse of the vertical synchronization signal VSYNC to the beginning of the next pulse of the vertical synchronization signal VSYNC is the period of an image frame displayed by the display module 240. The display period mentioned above may be the period of an image frame displayed by the display module 240. The vertical synchronization signal VSYNC ensures the scan of the display module 240 starts at the top of the image frame at the right time. The period from the beginning of a pulse of the horizontal synchronization signal HSYNC to the beginning of the next pulse of the horizontal synchronization signal HSYNC is the period of a scan line of the image frame displayed by the display module 240. The display period mentioned above may be the period of a scan line of the image frame displayed by the display module 240. The horizontal synchronization signal HSYNC has a plurality of high voltage levels and a plurality of low voltage levels to form a plurality of pulses. The horizontal synchronization signal HSYNC synchronizes the start of the horizontal image scan line in the display module 240 with the image source that generates the horizontal synchronization signal HSYNC.

The display drive signal DSD is applied to the display module 240 during a display period, which may include a plurality of pixel process periods (such as the pixel process periods 521-523) for the drive circuitry 250 to drive pixels or sub-pixels of the display module 240 at the high voltage level of the horizontal synchronization signal HSYNC. In this embodiment, the pixel process periods 521-523 are defined within the high voltage level of the horizontal synchronization signal HSYNC. Each pixel of the display module 240 may include multiple sub-pixels and each sub-pixel may display a different primary color, such as red, green or blue. The drive circuitry 250 may control the greyscale of at least one pixel or at least one sub-pixel of the display module 240 in each pixel process period 521-523.

The display period mentioned above further includes one or more display blank periods, such as the display blank periods 511-514. The blank periods are the periods during which no pixel or sub-pixel is driven. Each display blank period is a period between the pixel process periods of two scan lines, two pixels or two sub-pixels of the display module 240. Here a display blank period between two scan lines means a display blank period between the pixel process period of the last pixel of a scan line and the pixel process period of the first pixel of the next scan line, such as the display blank periods 511 and 514. The display blank period 511 and 514 are defined within the low voltage levels of the horizontal synchronization signal HSYNC, respectively while the display blank periods 512 and 513 are defined within the high voltage level of the horizontal synchronization signal HSYNC. The drive circuitry 250 does not drive any one pixel or sub-pixel of the display module 240 in the display blank periods. Since the display module 240 does not forward the drive signal DSD to the pixels in the display blank periods and thus has no big currents and does not produce common voltage (VCOM) noises in the display blank periods, the drive circuitry 250 may scan the touch sensor 230 by applying the touch drive signal DST in the display blank periods to avoid bursts of noises. At the default mode 500, the drive circuitry 250 scans the touch sensor 230 only in the display blank periods between two scan lines, such as the display blank periods 511 and 514. The lowermost part of Fig. 5 shows two scanning periods 531 and 532. Each scanning period is a period wherein the drive circuitry 250 scans the touch sensor 230 by applying the touch drive signal DST to the touch sensor 230.

The following is the discussion regarding the non-default modes of the touch drive signal DST that may be used in steps 420 and 428. When driving the touch sensor 230, the sense circuitry 220 may instruct the drive circuitry 250 to adjust the display blank periods to form a prolonged display blank period, and apply the touch drive signal DST for the touch sensor 230 within the prolonged display blank period. The drive circuitry 250 may merge a part or all of one or more display blank periods into the prolonged display blank period.

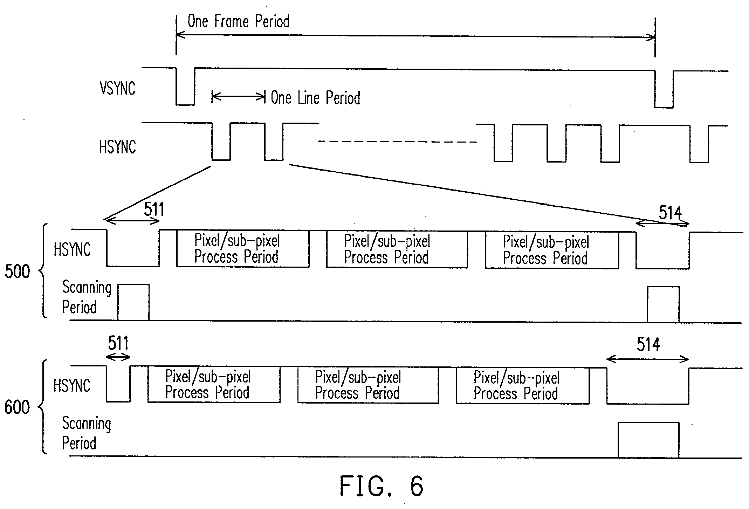

For example, Fig. 6 is a schematic diagram showing a comparison between the default mode 500 and another mode 600. In the mode 600, the drive circuitry 250 merges a part of the display blank period 511 into the prolonged display blank period 514 to make the display blank period 514 longer for accommodating more touch drive signal DST, and then the drive circuitry 250 scans the touch sensor 230 by applying the touch drive signal DST in the prolonged display blank period 514. The drive circuitry 250 may merge more display blank periods between scan lines into the prolonged display blank period 514 to make the prolonged display blank period 514 even longer.

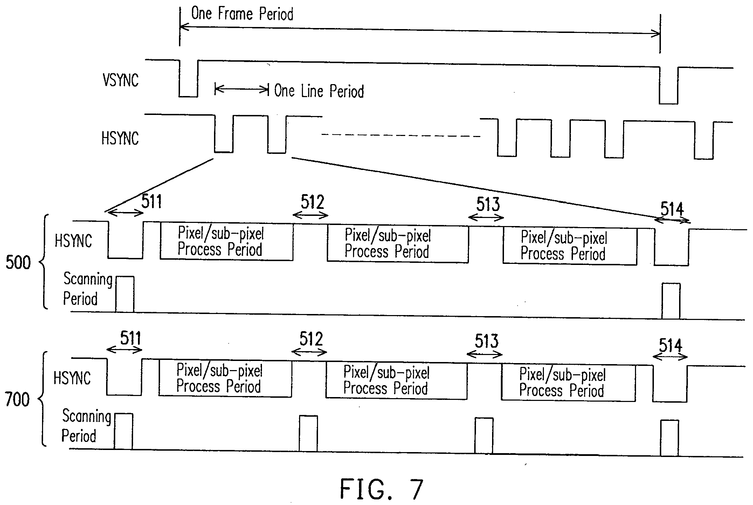

When driving the touch sensor 230, the drive circuitry 250 may distribute the applying of the touch drive signal DST in one or more display blank periods according to the length of each display blank period and the length of time required for charging the sensing elements of the touch sensor 230. For example, Fig. 7 is a schematic diagram showing a comparison between the default mode 500 and another mode 700. At the default mode 500, the touch drive signal DST is applied by the drive circuitry 250 to drive the touch sensor 230 within the blank periods 511 and 514 according to a first predetermined timing. At the mode 700, the touch drive signal DST is applied by the drive circuitry 250 to drive the touch sensor 230 within the blank periods 512 and 513, in addition to the blank periods 511 and 514, according to a second predetermined timing. In other words, the drive circuitry 250 scans the touch sensor 230 not only in the display blank period 511 or 514 between scan lines, but also in the display blank periods 512 and 513 between pixels or sub-pixels.

The drive circuitry 250 may distribute the scanning of the entire touch sensor 230 in one or more display blank periods according to the length of each display blank period and the length of time required for charging the sensing elements of the touch sensor 230. The drive circuitry 250 may apply the touch drive signal DST to only a part of the touch sensor 230 or the entire touch sensor 230 in each display blank period. The longer a display blank period, the more sensing elements or drive lines of the touch sensor 230 that the drive circuitry 250 may scan in the display blank period. When the control circuitry drives the sensing elements at the first mode, the touch drive signal is applied to the sensing elements according to a first charging period within the display period for all sensing elements. When the control circuitry drives the sensing elements at the second mode, the sensing elements is charged to reach a predetermined charged level by adjusting a second charging period or a second charging voltage for charging each sensing elements.

The sense circuitry determine whether a charge level, which is determined based on the detected sense signal, of at least one of the sensing elements is lower than a predetermined charge level. When it is determined that the charge level is not lower than the predetermined charge level, the control circuitry drives the touch sensor at the first mode. When it is determined that the charge level is lower than the predetermined charge level, the control circuitry drives the touch sensor at the second mode. The Sensing elements nearer to the drive circuitry 250 often require shorter charging time than the far sensing elements do. The number of near sensing elements that may be charged is often larger than the number of far sensing elements that may be charged in the same display blank period. The drive circuitry 250 may arrange the timing of the touch drive signal DST according to the aforementioned details. For each display blank period, the drive circuitry 250 may use the entire display blank period or only part of the display blank period to apply the touch drive signal DST. When the control circuitry or sense circuitry drives the sensing elements at the first mode, the touch drive signal is applied to the sensing elements according to a first charging period within the display period for all sensing elements. The first charging period is defined as the period for charging the far sensing elements. When the control circuitry or sense circuitry determine to drives the sensing elements at the second mode, the sensing elements is charged to reach a predetermined charged level by adjusting a second charging period or a second charging voltage for charging each sensing elements. The drive circuitry may charge the sensing element with different charging period or charging voltage. Therefore, the near sensing element may only require short period of time to charge compared to the far sensing elements. When it is determined that the charge level of the sensing elements is lower than a predetermined level, the control circuitry drives the touch sensor at the second mode; and wherein when the charge level of the sensing elements is not lower than a predetermined level, the control circuitry drives the touch sensor at the first mode.

Each drive line of the touch sensor 230 scanned in a display blank period may receive a single drive signal DST or a series of multiple touch drive signal DST or all of the touch drive signal DST applied by the drive circuitry 250 in the display blank period. In other words, the touch drive signal DST sent out by the drive circuitry 250 in a display blank period may concentrate on a single drive line or may be distributed into multiple drive lines of the touch sensor 230. Sometimes a single drive line needs to be driven by a series of multiple touch drive signal DST so that a burst of noises cannot corrupt all of the resultant sense signals SS.

A display blank period may be very short such that only one drive signal DST may be sent out. Sometimes a display blank period may be too short for applying one drive signal DST to fully charge a sensing element of the touch sensor 230. For this case or other considerations, the drive circuitry 250 may distribute the full charging of at least one of the sensing elements of the touch sensor 230 into multiple display blank periods. In other words, the drive circuitry 250 may charge the same sensing element partially in each display blank period so that the sensing element may be fully charged after multiple display blank periods.

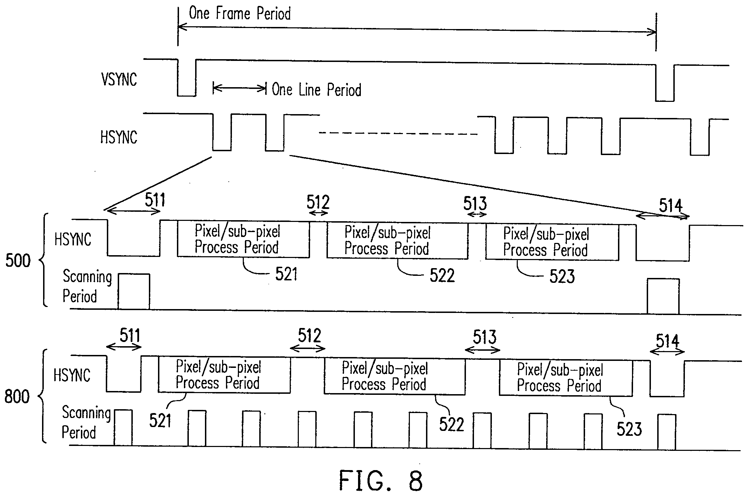

The drive circuitry 250 may drive a scan line of the display module 240 to display an image and simultaneously send one or more touch drive signal DST to one or more sensing elements of the touch sensor 230 in another scan line of the display module 240. For example, Fig. 8 is a schematic diagram showing a comparison between the default mode 500 and another mode 800 according to an embodiment of the present disclosure. At the mode 800, the drive circuitry 250 merges a part of the display blank periods 511 and 514 between scan lines into the display blank periods 512 and 513 between pixels or sub-pixels to even out the lengths of the display blank periods 511-514, and then the drive circuitry 250 scans the touch sensor 230 by applying the touch drive signal DST in each display blank period 511-514. Moreover, the drive circuitry 250 drives the pixels of a scan line of the display module 240 and simultaneously send touch drive signal DST to drive the touch sensor sensing elements in another scan line of the display module 240 to avoid the noises generated by the pixels of the first scan line.

There is another interpretation for Fig. 8. There are three pixel process periods at the mode 800, while there are ten scanning periods at the mode 800. Since more touch drive signal DST are applied to the touch sensor 230 than the display drive signal DSD are applied to the display module 240, the frequency of the touch drive signal DST is different from the frequency of the display drive signal DSD, which helps to reduce the noise level.

The drive circuitry 250 may select one or more pixel process periods of pixels or sub-pixels of the display module 240 according to the level of noises generated by the pixels or the sub-pixels displaying an image according to the display drive signal DSD and scan the touch sensor 230 by applying the touch drive signal DST in the selected pixel process periods of the pixels or sub-pixels. The drive signal DSD from the drive circuitry 250 specifies the greyscales to be displayed by the pixels or sub-pixels of the display module 240. The relation of the levels of noises generated by the display module 240 versus the displayed greyscales of the display module 240 may be measured in advance in a laboratory. This relation may be pre-stored in the drive circuitry 250 such that the drive circuitry 250 knows in advance which greyscales produce major noises and which greyscales produce minor tolerable noises. The drive circuitry 250 may select some pixel process periods of pixels or sub-pixels of the display module 240 with lower noises and applies the touch drive signal DST to the touch sensor 230 in the selected pixel process periods.

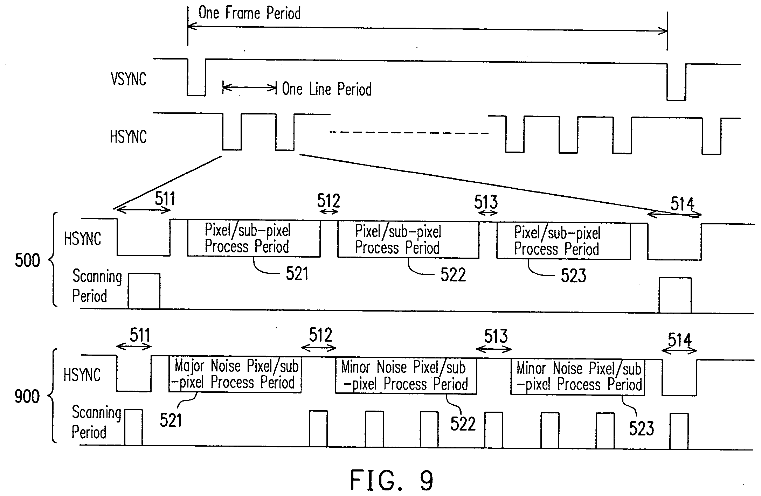

For example, Fig. 9 is a schematic diagram showing a comparison between the default mode 500 and another mode 900 according to an embodiment of the present disclosure. At the mode 900, the drive circuitry 250 merges a part of the display blank periods 511 and 514 between scan lines into the display blank periods 512 and 513 between pixels or sub-pixels to even out the lengths of the display blank periods 511-514, and then the drive circuitry 250 scans the touch sensor 230 in each display blank period 511-514. Moreover, since the greyscale displayed in the pixel process period 521 generates more noises and the greyscales displayed in the pixel process periods 522 and 523 generate less noises, the drive circuitry 250 also scans the touch sensor 230 in the pixel process periods 522 and 523.

As shown in Fig. 5 to Fig. 9, each mode of the touch drive signal DST involves specific timing or frequency of the touch drive signal DST. The sense circuitry 220 may determine the timing and/or frequency of the touch drive signal DST and then notifies the drive circuitry 250 of the timing and/or frequency of the touch drive signal DST. The drive circuitry 250 may synchronize the vertical synchronization signal VSYNC or the horizontal synchronization signal HSYNC or one or more display blank periods with the sense circuitry 220 for determining the timing and/or frequency for the drive circuitry 250 to apply the touch drive signal DST for the touch sensor 230. For the synchronization, the drive circuitry 250 may simply provide the vertical synchronization signal VSYNC and the horizontal synchronization signal HSYNC to the sense circuitry 220 so that the sense circuitry 220 may know the timing of the vertical synchronization signal VSYNC, the horizontal synchronization signal HSYNC, and the display blank periods.

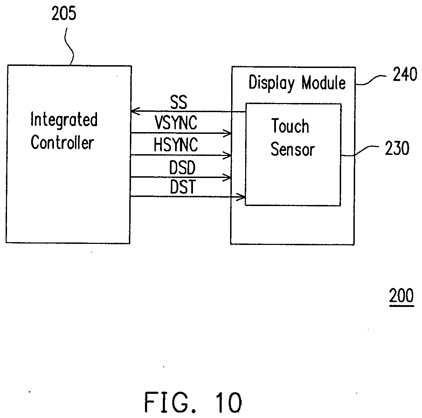

Fig. 10 is a schematic diagram showing an electronic device 200 according to an embodiment of the present disclosure. The electronic device 200 includes a display module 240, a touch sensor 230 integrated into the display module 240, and an integrated controller 205. The display module 240 and the touch sensor 230 constitute the touch display of the electronic device 200. The integrated controller 205 is coupled to the display module 240 and the touch sensor 230. The integrated controller 205 may include the drive circuitry 250 and the sense circuitry 220 shown in Fig. 2, or include the drive circuitry 250, the sense circuitry 220 and the process unit 210 shown in Fig. 10.

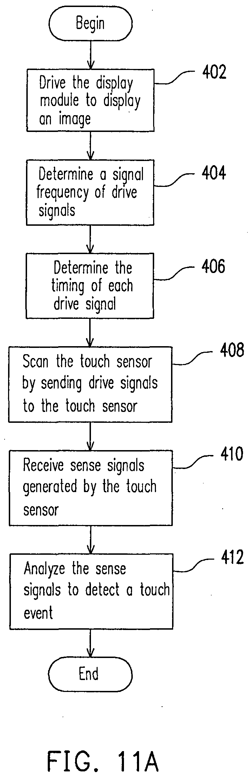

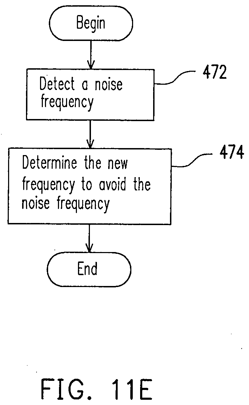

Fig. 11A is a flow chart showing a method for driving a touch sensor integrated into a display module of an electronic device according to an embodiment of the present disclosure. This method may be executed by the integrated controller 205. In step 402, the integrated controller 205 drives the display module 240 to display an image, such as the graphical user interface (GUI) of the electronic device 200. The integrated controller 205 drives the display module 240 by providing the display drive signal DSD, the vertical synchronization signal VSYNC and the horizontal synchronization signal HSYNC to the display module 240. Each of the display drive signal DSD controls the greyscale of a pixel or a sub-pixel of the display module 240. The vertical synchronization signal VSYNC indicates the beginning of each image frame. The horizontal synchronization signal HSYNC indicates the beginning of each scan line of an image frame.

In step 404, the integrated controller 205 determines a signal frequency of the touch drive signal DST to be sent to the touch sensor 230. The integrated controller 205 determines the signal frequency in order to avoid noises interfering with the sense signals SS. The integrated controller 205 may determine the signal frequency simply by trial and error. In other words, the integrated controller 205 may try various signal frequencies of the touch drive signal DST until an ideal signal frequency that may reduce the level of the noises is found.

Alternatively, the integrated controller 205 may detect fundamental frequencies and harmonic frequencies of the noises by analyzing the sense signals SS received in previous scans of the touch sensor 230. How to detect the frequencies of the noises is well-known and is not discussed here. The integrated controller 205 may set the signal frequency of the touch drive signal DST to avoid both the fundamental frequencies and harmonic frequencies of the noises for the best result. In other words, the signal frequency should be as far from the fundamental frequencies and harmonic frequencies of the noises as possible.

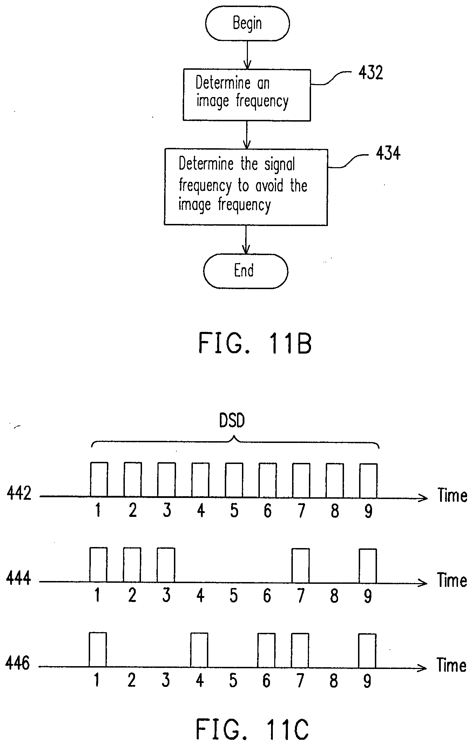

Alternatively, the integrated controller 205 may determine the signal frequency according to the flow shown in Fig. 11B. In step 432, the integrated controller 205 determines an image frequency by analyzing the greyscales of the image to be displayed by the display module 240. In step 434, the integrated controller 205 determines the signal frequency such that the signal frequency avoids the image frequency. In other words, the signal frequency should be as far from the image frequency as possible.

Fig. 11C is a schematic diagram showing pixel process periods of pixels or sub-pixels of the display module 240 according to an embodiment of the present disclosure. Fig. 11C also depicts some examples of the aforementioned image frequency. When the display module 240 is monochrome, each monochrome pixel is the smallest display unit and Fig. 11C shows the pixel process periods 442, 444 and 446 in which the integrated controller 205 sends the display drive signal DSD to the pixels of the display module 240. When the display module 240 is multicolored, each sub-pixel is the smallest display unit and Fig. 11C shows the pixel process periods 442, 444 and 446 in which the integrated controller 205 sends the display drive signal DSD to the sub-pixels of the display module 240. The display drive signal DSD output by the integrated controller 205 specify the greyscales to be displayed by the pixels or sub-pixels of the display module 240. Each multicolored pixel consists of multiple sub-pixels. Each sub-pixel of a pixel displays a different primary color. A pixel process period is a length of time in which the integrated controller 205 sends display drive signal DSD to one or more pixels or sub-pixels of the display module 240 for displaying the image.

In the pixel process period 442, the integrated controller 205 sends a drive signal DSD to the display module 240 for each of the nine pixels/sub-pixels 1-9. If the length of the pixel process period 442 is T, then the image frequency in the pixel process period 442 is 9/T.

When a pixel/sub-pixel of the display module 240 displays the default greyscale of the display module 240, the integrated controller 205 does not have to send the drive signal DSD to this pixel/sub-pixel. For example, in the pixel process period 444, the pixels/sub-pixels 4-6 and 8 display the default greyscale. Therefore, the integrated controller 205 outputs only five display drive signal DSD for the pixels/sub-pixels 1-3, 7 and 9. The image frequency in the pixel process period 444 is 5/T. In the pixel process period 446, the pixels/sub-pixels 2, 3, 5 and 8 display the default greyscale. Therefore, the integrated controller 205 outputs only five display drive signal DSD for the pixels/sub-pixels 1, 4, 6, 7 and 9. The image frequency in the pixel process period 446 is also 5/T.

Next, in step 406, the integrated controller 205 determines the timing of each of the touch drive signal DST according to the vertical synchronization signal VSYNC, the horizontal synchronization signal HSYNC and the signal frequency determined in step 404. In step 408, the integrated controller 205 scans the touch sensor 230 by sending the touch drive signal DST to the touch sensor 230 according to the timing determined in step 406. By determining the signal frequency and the timing, the integrated controller 205 determines the mode for applying the touch drive signal DST for the touch sensor 230.

The integrated controller 205 may know the beginning time and the end time of each display blank period and each pixel process period of the display module 240 based on the vertical synchronization signal VSYNC and the horizontal synchronization signal HSYNC. The integrated controller 205 may determine the timing such that the integrated controller 205 sends the touch drive signal DST to the touch sensor 230 only in the display blank periods of the display module 240 or the pixel process periods of pixels or sub-pixels of the display module 240 that generate noises at a relatively lower level. Fig. 5 to Fig. 9 provides some detailed examples and discussions about the timing of the touch drive signal DST.

In step 410, the integrated controller 205 receives the sense signals SS generated by the touch sensor 230 in response to the touch drive signal DST. In step 412, the integrated controller 205 analyzes the sense signals SS to detect one or more touch events. The integrated controller 205 may perform a function of the electronic device 200 according to the one or more touch events.

The present disclosure is not limited to the example shown in Fig. 11C. In other embodiments of the present disclosure, the integrated controller 205 may determine the mode to apply the touch drive signal DST based on any image property of the image to be displayed by the display module 240. The image property may be a histogram of the greyscales of the image or the signal frequency of the display drive signal DSD in the example of Fig. 11C.

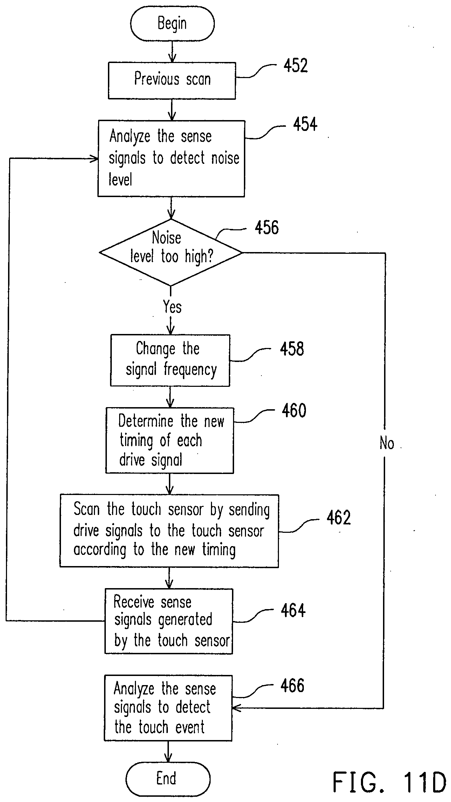

Fig. 11D is a flow chart showing a method for driving a touch sensor integrated into a display module of an electronic device according to another embodiment of the present disclosure. This method may be executed by the integrated controller 205. Step 452 is a previous scan of the touch sensor 230 consisting of steps 402-410 in Fig. 11A. Next, in step 454, the integrated controller 205 analyzes the sense signals SS to detect the level of the noises. In step 456, the integrated controller 205 checks whether the level of the noises is higher than a predetermined value or not. When the level of the noises is not higher than the predetermined value, the integrated controller 205 analyzes the sense signals SS to detect the touch event in step 466. When the level of the noises is higher than the predetermined value, the integrated controller 205 changes the signal frequency of the touch drive signal DST to a new frequency in step 458. The integrated controller 205 determines the new frequency in order to avoid the noises.

The integrated controller 205 may determine the new frequency of the touch drive signal DST according to the flow shown in Fig. 4E. The integrated controller 205 analyzes the sense signals SS to detect the frequency of the noises in step 472 and then in step 474 determines the new frequency such that the new frequency avoids the noise frequency.

Next, in step 460, the integrated controller 205 determines the new timing of each of the touch drive signal DST according to the vertical synchronization signal VSYNC, the horizontal synchronization signal HSYNC and the new frequency determined in step 458. In step 462, the integrated controller 205 scans the touch sensor 230 by sending the touch drive signal DST to the touch sensor 230 according to the new timing. In step 464, the integrated controller 205 receives the sense signals SS generated by the touch sensor 230 in response to the touch drive signal DST, and then the flow returns to step 454.

The integrated controller 205 may execute the loop of steps 454-464 as a trial-and-error process. As long as the noise level is too high, the integrated controller 205 may simply choose another frequency for the touch drive signal DST and repeat the loop until the detected level of noises drops to an acceptable level.

In an embodiment of the present disclosure, the sense circuitry 220, the drive circuitry 250, and the process unit 210 may exchange data and control signals in order to cooperate in executing the steps in Fig 2A, Fig 2C, Fig 3A, Fig. 3B, Fig. 4A and Fig. 4B. Step 402 may be executed by the drive circuitry 250. Step 404 may be executed by the process unit 210, the sense circuitry 220 or the drive circuitry 250. Step 406 may be executed by the sense circuitry 220 or the drive circuitry 250. Step 408 may be executed by the drive circuitry 250. Steps 410 and 412 may be executed by the sense circuitry 220. Step 432 may be executed by the process unit 210. Step 434 may be executed by the process unit 210, the sense circuitry 220 or the drive circuitry 250.

Steps 454 and 456 may be executed by the sense circuitry 220. Each of steps 458 and 460 may be executed by the sense circuitry 220 or the drive circuitry 250. Step 462 may be executed by the drive circuitry 250. Steps 464 and 466 may be executed by the sense circuitry 220. Step 472 may be executed by the sense circuitry 220. Step 474 may be executed by the sense circuitry 220 or the drive circuitry 250.

In an embodiment of the present disclosure, the sense circuitry 220 or the drive circuitry 250 may decide when to scan the touch sensor 230. When the time of the scanning is decided by the sense circuitry 220, the sense circuitry 220 may send at least one control signal to inform the drive circuitry 250 to begin sending the touch drive signal DST to the touch sensor 230 and the sense circuitry 220 may wait to receive the sense signals SS. When the time of the scanning is decided by the drive circuitry 250, the drive circuitry 250 may begin sending the touch drive signal DST to the touch sensor 230 and send at least one control signal to inform the sense circuitry 220 to receive the sense signals SS. The process unit 210 is the main system of the electronic device 200. The process unit 210 may perform the function of the electronic device 200 according to one or more touch events detected by the sense circuitry 220.

In an embodiment of the present disclosure, the sense circuitry 220 may detect the relation of the levels of noises versus the displayed greyscales of the pixels or sub-pixels of the display module 240. This relation may be stored in the process unit 210, the sense circuitry 220 or the drive circuitry 250 for using the mode 900 in Fig. 9.

In summary, the present invention may determine the mode for applying the drive signals for the touch sensor in order to avoid bursts of noises and get better results of touch sensor scanning.

It will be apparent to those skilled in the art that various modifications and variations may be made to the structure of the present invention without departing from the scope of the following claims.

## Claims

1. An electronic device (200) comprising:
a display module (240);
a touch sensor (230) integrated into the display module (240); and
a control circuitry (201, 250) coupled to the touch sensor (230) and the display module (240) and configured to drive the touch sensor (230) by a touch drive signal (DST) at one of a first mode (500) and a second mode (800, 900) and detect a sense signal (SS) from the touch sensor (230) when the touch sensor (230) is driven by the touch drive signal (DST),
wherein the display module (240) comprises a plurality of pixels or sub-pixels, and the control circuitry (201, 250) is further configured to drive the pixels or sub-pixels by a display drive signal (DSD) during a plurality of pixel process periods, and the control circuitry (201, 250) is further configured to not drive the pixels or sub-pixels in a plurality of display blank periods (511-514), wherein a display period includes said plurality of pixel process periods, during which the pixels or sub-pixels are driven, and said plurality of display blank periods, during which no pixel or sub-pixel is driven;
**characterized in that**
when the touch sensor (230) is driven by the touch drive signal (DST) at the first mode (500), the touch drive signal (DST) is applied to the touch sensor (230) only in the display blank periods (511, 514) between two scan lines, wherein a display blank period between two scan lines means a display blank period between the pixel process period of the last pixel of a scan line and the pixel process period of the first pixel of the next scan line, and the control circuitry (201, 250) detects the sense signal (SS) from the touch sensor (230) only in the display blank periods (511, 514) between two scan lines, and when the touch sensor (230) is driven by the touch drive signal (DST) at the second mode (700, 800, 900), the touch drive signal (DST) is applied to the touch sensor (230) in at least two display blank periods (512, 513) in the same scan line and in the display blank periods (511, 514) between two scan lines and the control circuitry (201, 250) detects the sense signal (SS) from the touch sensor (230) in at least two display blank periods (512, 513) in the same scan line and in the display blank periods (511, 514) between two scan lines;
wherein the control circuitry (201) is further configured to determine the one of the first mode (500) and the second mode (700, 800, 900) for driving the touch sensor (230) based on a determination whether the sense signal (SS) has a noise level greater than a predetermined level; wherein when it is determined that the sense signal (SS) has the noise level greater than the predetermined level, the control circuitry (201) is configured to drive the touch sensor (230) at the first mode; and wherein when it is determined that the sense signal (SS) does not have the noise level greater than the predetermined level, the control circuitry (201) is configured to drive the touch sensor (230) at the second mode.

2. The electronic device of claim 1, wherein when the touch sensor (230) is driven by the touch drive signal (DST) at the second mode (800, 900), the touch drive signal (DST) is applied to the touch sensor (230) in at least two display blank periods (512, 513) in the same scan line, at least two of the pixel process periods and in the display blank periods (511, 514) between two scan lines and the control circuitry detects the sense signal (SS) from the touch sensor (230) in at least two display blank periods (512, 513) in the same scan line, at least two of the pixel process periods and in the display blank periods (511, 514) between two scan lines.

3. The electronic device of claim 1 or 2, wherein the control circuitry (201) further comprises:
a sense circuitry (220) coupled to the touch sensor (230) and configured to determine the one of the first mode (500) and the second mode (700, 800, 900) for driving the touch sensor (230), and configured to detect the sense signal (SS) from the touch sensor (230); and
a drive circuitry (250) coupled to the sense circuitry (220), the display module (240) and the touch sensor (230) and configured to apply the display drive signal (DSD) for driving the display module (240) and apply the touch drive signal (DST) for driving the touch sensor (230) at the one determined mode; and wherein when the sense circuitry (220) determines the one of the first mode (500) and the second mode (700, 800, 900) for driving the touch sensor (230), the sense circuitry (220) is configured to instruct the drive circuitry (250) to change to the one determined mode for driving the touch sensor (230) from the other mode.

4. The electronic device of any of claims 1-3, wherein the touch sensor (230) further comprises a plurality of sensing elements and the control circuitry (201) is configured to apply the touch drive signal (DST) to charge the sensing elements at one of the first mode (500) and the second mode (700, 800, 900), wherein when the control circuitry (201) applies the touch drive signal (DST) to charge the sensing elements at the first mode (500), the touch drive signal (DST) charges each of the sensing elements for a first charging period of time; and when the control circuitry (201) applies the touch drive signal (DST) to charge the sensing elements at the second mode (700, 800, 900), the touch drive signal (DST) charges at least one of the sensing elements for a second charging period of time; and
wherein the determination is to determine whether a charge level, which is determined based on the detected sense signal (SS), of at least one of the sensing elements is lower than a predetermined charge level; wherein when it is determined that the charge level is not lower than the predetermined charge level, the control circuitry (201) is configured to drive the touch sensor (230) at the first mode (500); and wherein when it is determined that the charge level is lower than the predetermined charge level, the control circuitry (201) is configured to drive the touch sensor (230) at the second mode (700, 800, 900).

5. The electronic device of any of claims 1-4, wherein the touch sensor (230) further comprises a plurality of sensing elements and the control circuitry (201) is configured to apply the touch drive signal (DST) to charge the sensing elements at one of the first mode (500) and the second mode (700, 800, 900), wherein when the control circuitry (201) applies the touch drive signal (DST) to charge the sensing elements at the first mode (500), the touch drive signal (DST) charges each of the sensing elements by a first charging voltage; and when the control circuitry (201) applies the touch drive signal to charge the sensing elements at the second mode (700, 800, 900), the touch drive signal (DST) charges at least one of the sensing elements for a second charging period of time by a second charging voltage.

6. The electronic device of any of claims1-5, wherein the display module (240) further comprises a plurality of scan lines connected to the plurality of pixels or sub-pixels, and the control circuitry (201) is configured to apply the display drive signal (DST) to each one of the scan lines based on a horizontal synchronization signal (HSYNC); and wherein when the control circuitry (201) determines the one mode for driving the touch sensor (230), at least one of the blank periods is prolonged and the sense circuitry (220) instructs the drive circuitry (250) to apply the touch drive signal (DST) within the prolonged blank period for driving the touch sensor (230).

7. The electronic device of any of claims 1-6, wherein the control circuitry (201) further comprises:
a sense circuitry (220) coupled to the touch sensor (230) and configured to detect the sense signal (SS) from the touch sensor (230);
a process unit (210) coupled to the sense circuitry (220) and configured to determine the one of the first mode (500) and the second mode (700, 800, 900) for driving the touch sensor (230); and,
a drive circuitry (250) coupled to the sense circuitry (220) and the process unit (210), the display module (240) and the touch sensor (230) and configured to apply the display drive signal (DSD) for driving the display module (240) and apply the touch drive signal (DST) for driving the touch sensor (230) at the one determined mode; and
wherein the determination is for the process unit (210) to determine whether an image to be displayed on the display module (240) results in a noise level greater than a predetermined level for the touch sensor (230); wherein when the process unit (210) determines that the image to be displayed on the display module (240) results in the noise level greater than the predetermined level, the process unit (210) is configured to determine the first mode (500) for the drive circuitry (250) to drive the touch sensor (230); and wherein when the process unit (210) determines that the image to be displayed on the display module (240) does not result in the noise level greater than the predetermined level, the process unit (210) is configured to determine the second mode (700, 800, 900) for the drive circuitry (250) to drive the touch sensor (230).

8. A method for driving a touch sensor (230), which is integrated into a display module (240), having a plurality of pixels or sub-pixels, in an electronic device (200), comprising:
determining (420) one of a first mode (500) and a second mode (700, 800, 900) for driving the touch sensor (230) based on a determination whether the sense signal (SS) has a noise level greater than a predetermined level;
driving (422) the touch sensor (230) by a touch drive signal (DST) at the first mode (500) when it is determined that the sense signal (SS) has the noise level greater than the predetermined level, and driving (422) the touch sensor (230) by a touch drive signal (DST) at the second mode (800, 900) when it is determined that the sense signal (SS) does not have the noise level greater than the predetermined level; and
detecting (424) a sense signal (SS) from the touch sensor (230) when the touch sensor (230) is driven by the touch drive signal (DST),
wherein the pixels or sub-pixels is driven by a display drive signal (DSD) during a plurality of pixel processing periods, and the pixels or sub-pixels is not driven in a plurality of display blank periods (511-514), wherein a display period includes said plurality of pixel process periods, during which the pixels or sub-pixels are driven, and said plurality of display blank periods, during which no pixel or sub-pixel is driven, and when the touch sensor (230) is driven by the touch drive signal (DST) at the first mode (500), the touch drive signal (DST) is applied to the touch sensor (230) only in the display blank periods (511, 514) between two scan lines and the sense signal (SS) from the touch sensor (230) is detected only in the display blank periods (511, 514) between two scan lines, wherein a display blank period between two scan lines means a display blank period between the pixel process period of the last pixel of a scan line and the pixel process period of the first pixel of the next scan line, and when the touch sensor (230) is driven by the touch drive signal (DST) at the second mode (700, 800, 900), the touch drive signal (DST) is applied to the touch sensor (230) in at least two display blank periods (512, 513) in the same scan line and in the display blank periods (511, 514) between two scan lines and the sense signal (SS) from the touch sensor (230) is detected in at least two display blank periods (512, 513) in the same scan line and in the display blank periods (511,514) between two scan lines.

9. The method of claim 8, wherein when the touch sensor (230) is driven by the touch drive signal (DST) at the second mode (800, 900), the touch drive signal (DST) is applied to the touch sensor (230) in at least two display blank periods (512, 513) in the same scan line, at least two of the pixel process periods and in the display blank periods (511, 514) between two scan lines and the sense signal (SS) from the touch sensor (230) is detected in at least two display blank periods (512, 513) in the same scan line, at least two of the pixel process periods and in the display blank periods (511, 514) between two scan lines.

## Patentansprüche

1. Elektronische Vorrichtung (200), die Folgendes aufweist:
ein Anzeigemodul (240);
einen Berührungssensor (230), der in das Anzeigemodul (240) integriert ist;
und
eine Steuerschaltung (201, 250), die mit dem Berührungssensor (230) und dem Anzeigemodul (240) gekoppelt und konfiguriert ist, um den Berührungssensor (230) durch ein Berührungsantriebssignal (DST) bei einem ersten Modus (500) oder einem zweiten Modus (800, 900) anzutreiben und ein Abtastsignal (SS) des Berührungssensors (230) zu detektieren, wenn der Berührungssensor (230) durch das Berührungsantriebssignal (DST) angetrieben wird,
wobei das Anzeigemodul (240) eine Vielzahl von Pixeln oder Subpixeln aufweist, und die Steuerschaltung (201, 250) ferner konfiguriert ist, um die Pixel oder Subpixel durch ein Anzeigeantriebssignal (DSD) während einer Vielzahl von Pixelverarbeitungsperioden anzutreiben, und die Steuerschaltung (201, 250) ferner konfiguriert ist, um die Pixel oder Subpixel in einer Vielzahl von Anzeigelückenperioden (511-514) nicht anzutreiben, wobei eine Anzeigeperiode die Vielzahl der Pixelverarbeitungsperioden, in denen die Pixel oder Subpixel angetrieben werden, und die Vielzahl der Anzeigelückenperioden, in denen kein Pixel oder Subpixel angetrieben wird, aufweist;
**dadurch gekennzeichnet, dass**
wenn der Berührungssensor (230) durch das Berührungsantriebssignal (DST) in dem ersten Modus (500) angetrieben wird, das Berührungsantriebssignal (DST) auf den Berührungssensor (230) nur in den Anzeigelückenperioden (511, 514) zwischen zwei Scannlinien angewendet wird, wobei eine Anzeigelückenperiode zwischen zwei Scannlinien eine Anzeigelückenperiode zwischen der Pixelverarbeitungsperiode des letzten Pixels einer Scannlinie und der Pixelverarbeitungsperiode des ersten Pixels der nächsten Scannlinie bezeichnet, und die Steuerschaltung (201, 250) das Abtastsignal (SS) von dem Berührungssensor (230) nur in den Anzeigelückenperioden (511, 514) zwischen zwei Scannlinien detektiert, und wenn der Berührungssensor (230) durch das Berührungsantriebssignal (DST) in dem zweiten Modus (700, 800, 900) angetrieben wird, das Berührungsantriebssignal (DST) auf den Berührungssensor (230) in zumindest zwei Anzeigelückenperioden (512, 513) in der gleichen Scannlinie und in den Anzeigelückenperioden (511, 514) zwischen zwei Scannlinien angewendet wird, und die Steuerschaltung (201, 250) das Abtastsignal (SS) von dem Berührungssensor (230) in zumindest zwei Anzeigelückenperioden (512, 513) in der gleichen Scannlinie und den Anzeigelückenperioden (511, 514) zwischen zwei Scannlinien detektiert;
wobei die Steuerschaltung (201) ferner konfiguriert ist, um den ersten Modus (500) oder den zweiten Modus (700, 800, 900) für den Antrieb des Berührungssensor (230) basierend auf einer Bestimmung, ob das Abtastsignal (SS) einen Rauschpegel aufweist, der größer als ein vorbestimmter Schwellenwert ist, zu bestimmen; wobei wenn bestimmt wird, dass das Abtastsignal (SS) den Rauschpegel aufweist, der größer als der vorbestimmte Pegel ist, die Steuerschaltung (201) konfiguriert ist, um den Berührungssensor (230) in dem ersten Modus anzutreiben; und wobei wenn bestimmt wird, dass das Abtastsignal (SS) keinen Rauschpegel aufweist, der größer als der vorbestimmte Pegel ist, die Steuerschaltung (201) konfiguriert ist, um den Berührungssensor (230) in dem zweiten Modus anzutreiben.

2. Elektronische Vorrichtung gemäß Anspruch 1, wobei wenn der Berührungssensor (230) durch das Berührungsantriebssignal (DST) in dem zweiten Modus (800, 900) angetrieben wird, das Berührungsantriebssignal (DST) auf den Berührungssensor (230) in zumindest zwei Anzeigelückenperioden (512, 513) in der gleichen Scannlinie, zumindest zwei der Pixelverarbeitungsperioden und in den Anzeigelückenperioden (511, 514) zwischen zwei Scannlinien angewendet wird und die Steuerschaltung das Abtastsignal (SS) von dem Berührungssensor (230) in zumindest zwei Anzeigelückenperioden (512, 513) in der gleichen Scannlinie, zumindest zwei der Pixelverarbeitungsperioden und in den Anzeigelückenperioden (511, 514) zwischen zwei Scannlinien detektiert.

3. Elektronische Vorrichtung gemäß Anspruch 1 oder 2, wobei die Steuerschaltung (201) ferner Folgendes aufweist:
eine Abtastschaltung (220), die mit dem Berührungssensor (230) gekoppelt ist und konfiguriert ist, um den ersten Modus (500) oder den zweiten Modus (700, 800, 900) für den Antrieb des Berührungssensor (230) zu bestimmen, und konfiguriert ist, um das Abtastsignal (SS) von dem Berührungssensor (230) zu detektieren; und
eine Antriebsschaltung (250), die mit der Abtastschaltung (220), dem Anzeigemodul (240) und dem Berührungssensor (230) gekoppelt ist, und die konfiguriert ist, um das Anzeigeantriebssignal (DSD) für den Antrieb des Anzeigemoduls (240) anzuwenden und das Berührungsantriebssignal (DST) für den Antrieb des Berührungssensors (230) bei dem einen bestimmten Modus anzuwenden; und wobei wenn die Abtastschaltung (220) den ersten Modus (500) oder den zweiten Modus (700, 800, 900) für den Antrieb des Berührungssensors (230) bestimmt, die Abtastschaltung (220) konfiguriert ist, um die Antriebsschaltung (250) anzuweisen, von dem anderen Modus zu dem einen bestimmten Modus für den Antrieb des Berührungssensors (230) zu wechseln.

4. Elektronische Vorrichtung gemäß einem der Ansprüche 1 - 3, wobei der Berührungssensor (230) ferner eine Vielzahl von Abtastelementen aufweist und die Steuerschaltung (201) konfiguriert ist, um das Berührungsantriebssignal (DST) anzuwenden, um die Abtastelemente in dem ersten Modus (500) oder dem zweiten Modus (700, 800, 900) zu laden, wobei wenn die Steuerschaltung (201) das Berührungsantriebssignal (DST) anwendet, um die Abtastelemente in dem ersten Modus (500) zu laden, das Berührungsantriebssignal (DST) jedes der Abtastelemente für eine erste Ladezeitperiode lädt, und wenn die Steuerschaltung (201) das Berührungsantriebssignal (DST) anwendet, um die Abtastelemente in dem zweiten Modus (700, 800, 900) zu laden, das Berührungsantriebssignal (DST) zumindest eines der Abtastelemente für eine zweite Ladezeitperiode lädt; und
wobei die Bestimmung darin besteht, zu bestimmen ob ein Ladepegel, der basierend auf dem detektierten Abtastsignal (SS) bestimmt wird, von zumindest einem der Abtastelemente geringer als ein vorbestimmter Ladepegel ist; wobei wenn bestimmt wird, dass der Ladepegel nicht niedriger als der vorbestimmte Ladepegel ist, die Steuerschaltung (201) konfiguriert ist, um den Berührungssensor (230) in dem ersten Modus (500) anzutreiben; und wobei wenn bestimmt wird, dass der Ladepegel geringer als der vorbestimmte Ladepegel ist, die Steuerschaltung (201) konfiguriert ist, um den Berührungssensor (230) in dem zweiten Modus (700, 800, 900) anzutreiben.

5. Elektronische Vorrichtung gemäß einem der Ansprüche 1 - 4, wobei der Berührungssensor (230) ferner eine Vielzahl von Abtastelementen aufweist und die Steuerschaltung (201) konfiguriert ist, um das Berührungsantriebssignal (DST) anzuwenden, um die Abtastelemente in dem ersten Modus (500) oder dem zweiten Modus (700, 800, 900) zu laden, wobei wenn die Steuerschaltung (201) das Berührungsantriebssignal (DST) anwendet, um die Abtastelemente in dem ersten Modus (500) zu laden, das Berührungsantriebssignal (DST) jedes der Abtastelemente mit einer ersten Ladespannung lädt; und wenn die Steuerschaltung (201) das Berührungsantriebssignal anwendet, um die Abtastelemente in dem zweiten Modus (700, 800, 900) zu laden, das Berührungsantriebssignal (DST) zumindest eines der Abtastelemente für eine zweite Ladezeitperiode mit einer zweiten Ladespannung lädt.

6. Elektronische Vorrichtung gemäß einem der Ansprüche 1 - 5, wobei das Anzeigemodul (240) ferner eine Vielzahl von Scannlinien aufweist, die mit der Vielzahl der Pixel oder Subpixel verbunden sind, und die Steuerschaltung (201) konfiguriert ist, um das Anzeigeantriebssignal (DST) auf jede der Scannlinien basierend auf einem horizontalen Synchronisierungssignal (HSYNC) anzuwenden; und wobei wenn die Steuerschaltung (201) den einen Modus für den Antrieb des Berührungssensors (230) bestimmt, zumindest eine der Lückenperioden verlängert wird und die Abtastschaltung (220) die Antriebsschaltung (250) anweist, das Berührungsantriebssignal (DST) innerhalb der verlängerten Lückenperiode für den Antrieb des Berührungssensors (230) anzuwenden.

7. Elektronische Vorrichtung gemäß einem der Ansprüche 1 - 6, wobei die Steuerschaltung (201) ferner Folgendes aufweist:
eine Abtastschaltung (220), die mit dem Berührungssensor (230) gekoppelt und konfiguriert ist, um das Abtastsignal (SS) von dem Berührungssensor (230) zu detektieren;
eine Verarbeitungseinheit (210), die mit der Abtastschaltung (220) gekoppelt ist und konfiguriert ist, um den ersten Modus (500) oder den zweiten Modus (700, 800, 900) für den Antrieb des Berührungssensors (230) zu bestimmen;
und
eine Antriebsschaltung (250), die mit der Abtastschaltung (220) und der Verarbeitungseinheit (210), dem Anzeigemodul (240) und dem Berührungssensor (230) gekoppelt ist, und konfiguriert ist, um das Anzeigeantriebssignal (DSD) für den Antrieb des Anzeigemoduls (240) anzuwenden, und um das Berührungsantriebssignal (DST) für den Antrieb des Berührungssensors (230) in dem einen bestimmten Modus anzuwenden; und
wobei die Bestimmung erfolgt, um für die Verarbeitungseinheit (210) zu bestimmen, ob ein Bild, das auf dem Anzeigemodul (240) angezeigt werden soll, zu einem Rauschpegel führt, der größer als ein vorbestimmter Pegel für den Berührungssensor (230) ist; wobei wenn die Verarbeitungseinheit (210) bestimmt, dass das auf dem Anzeigemodul (240) anzuzeigende Bild zu einem Rauschpegel führt, der größer als der vorbestimmte Pegel ist, die Verarbeitungseinheit (210) konfiguriert ist, um den ersten Modus (500) für die Antriebsschaltung (250) zu bestimmen, um den Berührungssensor (230) anzutreiben; und wobei wenn die Verarbeitungseinheit (210) bestimmt, dass das auf dem Anzeigemodul (240) anzuzeigende Bild nicht zu dem Rauschpegel führt, der größer als der vorbestimmte Pegel ist, die Verarbeitungseinheit (210) konfiguriert ist, um den zweiten Modus (700, 800, 900) für die Antriebsschaltung (250) für den Antrieb des Berührungssensors (230) zu bestimmen.

8. Verfahren zum Antreiben eines Berührungssensors (230), der in ein Anzeigemodul (240) mit einer Vielzahl von Pixeln oder Subpixeln in einer elektronischen Vorrichtung (200) integriert ist, das Folgendes aufweist:
Bestimmen (420) eines ersten Modus (500) und eines zweiten Modus (700, 800, 900) zum Antreiben des Berührungssensors (230) basierend auf einer Bestimmung, ob das Abtastsignal (SS) einen Rauschpegel aufweist, der größer als ein vorbestimmter Pegel ist;
Antreiben (422) des Berührungssensors (230) mit einem Berührungsantriebssignal (DST) in dem ersten Modus (500) wenn bestimmt wird, dass das Abtastsignal (SS) den Rauschpegel aufweist, der größer als der vorbestimmte Pegel ist, und Antreiben (422) des Berührungssensors (230) mit einem Berührungsantriebssignal (DST) in dem zweiten Modus (800, 900), wenn bestimmt wird, dass das Abtastsignal (SS) keinen Rauschpegel aufweist, der größer als der vorbestimmte Pegel ist; und
Detektieren (424) eines Abtastsignals (SS) von dem Berührungssensor (230) wenn der Berührungssensor (230) mit dem Berührungsantriebssignal (DST) angetrieben wird,
wobei die Pixel oder Subpixel durch ein Anzeigeantriebssignal (DSD) während einer Vielzahl von Pixelverarbeitungsperioden angetrieben wird, und die Pixel oder Subpixel in einer Vielzahl von Anzeigelückenperioden (511-514) nicht angetrieben werden, wobei eine Anzeigeperiode die Vielzahl der Pixelverarbeitungsperioden, in denen die Pixel oder Subpixel angetrieben werden, und die Vielzahl der Anzeigelückenperioden aufweist, in denen kein Pixel oder Subpixel angetrieben wird, und wenn der Berührungssensor (230) durch das Berührungsantriebssignal (DST) in dem ersten Modus (500) angetrieben wird, das Berührungsantriebssignal (DST) auf den Berührungssensor (230) nur in den Anzeigelückenperioden (511, 514) zwischen zwei Scannlinien angewendet wird und das Abtastsignal (SS) von dem Berührungssensor (230) nur in den Anzeigelückenperioden (511, 514) zwischen zwei Scannlinien detektiert wird, wobei eine Anzeigelückenperiode zwischen zwei Scannlinien eine Anzeigelückenperiode zwischen der Pixelverarbeitungsperiode des letzten Pixels einer Scannlinie und der Pixelverarbeitungsperiode des ersten Pixels der nächsten Scannlinie bezeichnet, und wenn der Berührungssensor (230) durch das Berührungsantriebssignal (DST) in dem zweiten Modus (700, 800, 900) angetrieben wird, das Berührungsantriebssignal (DST) auf den Berührungssensor (230) in zumindest zwei Anzeigelückenperioden (512, 513) in der gleichen Scannlinie und in den Anzeigelückenperioden (511, 514) zwischen zwei Scannlinien angewendet wird, und das Abtastsignal (SS) von dem Berührungssensor (230) in zumindest zwei Anzeigelückenperioden (512, 513) in der gleichen Scannlinie und in den Anzeigelückenperioden (511, 514) zwischen zwei Scannlinien detektiert wird.

9. Verfahren gemäß Anspruch 8, wobei wenn der Berührungssensor (230) durch das Berührungsantriebssignal (DST) in dem zweiten Modus (800, 900) angetrieben wird, das Berührungsantriebssignal (DST) auf den Berührungssensor (230) in zumindest zwei Anzeigelückenperioden (512, 513) in der gleichen Scannlinie zumindest zwei der Pixelverarbeitungsperioden und in den Anzeigelückenperioden (511, 514) zwischen zwei Scannlinien angewendet wird, und das Abtastsignal (SS) von dem Berührungssensor (230) in zumindest zwei Anzeigelückenperioden (512, 513) in der gleichen Scannlinie, zumindest zwei Pixelverarbeitungsperioden und in den Anzeigelückenperioden (511, 514) zwischen zwei Scannlinien detektiert wird.

## Revendications

1. Dispositif électronique (200) comprenant :
un module d'affichage (240) ;
un capteur tactile (230) intégré dans le module d'affichage (240) ; et
un circuit de commande (201, 250) couplé au capteur tactile (230) et au module d'affichage (240) et agencé pour commander le capteur tactile (230) par un signal de commande tactile (DST) avec l'un d'un premier mode (500) et d'un deuxième mode (800, 900) et pour détecter un signal de détection (SS) provenant du capteur tactile (230) lorsque le capteur tactile (230) est commandé par le signal de commande tactile (DST),
dans lequel le module d'affichage (240) comprend une pluralité de pixels ou de sous-pixels, et le circuit de commande (201, 250) est en outre agencé pour commander les pixels ou les sous-pixels par un signal de commande d'affichage (DSD) pendant une pluralité de périodes de traitement de pixels, et le circuit de commande (201, 250) est agencé en outre pour ne pas commander les pixels ou les sous-pixels dansune pluralité de périodes d'affichage vide (511-514), une période d'affichage comprenant la pluralité de périodes de traitement de pixels, pendant lesquelles les pixels ou les sous-pixels sont commandés, et la pluralité de périodes d'affichage vide, pendant lesquelles aucun pixel ou sous-pixel n'est commandé ;
**caractérisé en ce que**
lorsque le capteur tactile (230) est commandé par le signal de commande tactile (DST) avec le premier mode (500), le signal de commande tactile (DST) est appliqué au capteur tactile (230) seulement dans les périodes d'affichage vide (511, 514) entre deux lignes de balayage, dans lequel une période d'affichage vide entre deux lignes de balayage signifie une période d'affichage vide entre la période de traitement de pixel du dernier pixel d'une ligne de balayage et la période de traitement de pixel du premier pixel de la ligne de balayage suivante, et le circuit de commande (201, 250) détecte le signal de détection (SS) provenant du capteur tactile (230) seulement dans les périodes d'affichage vide (511, 514) entre deux lignes de balayage, et lorsque le capteur tactile (230) est commandé par le signal de commande tactile (DST) avec le deuxième mode (700, 800, 900), le signal de commande tactile (DST) est appliqué au capteur tactile (230) dans au moins deux périodes d'affichage vide (512, 513) dans la même ligne de balayage et dans les périodes d'affichage vide (511, 514) entre deux lignes de balayage et le circuit de commande (201, 250) détecte le signal de détection (SS) provenant du capteur tactile (230) dans au moins deux périodes d'affichage vide (512, 513) dans la même ligne de balayage et dans les périodes d'affichage vide (511, 514) entre deux lignes de balayage ;
dans lequel le circuit de commande (201) est en outre agencé pour déterminer lequel du premier mode (500) et du deuxième mode (700, 800, 900) doit commander le capteur tactile (230) sur la base d'une détermination si le signal de détection (SS) a un niveau de bruit supérieur à un niveau prédéterminé ; dans lequel lorsqu'il est déterminé que le signal de détection (SS) a un niveau de bruit supérieur au niveau prédéterminé, le circuit de commande (201) est agencé pour commander le capteur tactile (230) avec le premier mode ; et dans lequel lorsqu'il est déterminé que le signal de détection (SS) n'a pas un niveau de bruit supérieur au niveau prédéterminé, le circuit de commande (201) est agencé pour commander le capteur tactile (230) avec le deuxième mode.

2. Dispositif électronique selon la revendication 1, dans lequel lorsque le capteur tactile (230) est commandé par le signal de commande tactile (DST) avec le deuxième mode (800, 900), le signal de commande tactile (DST) est appliqué au capteur tactile (230) dans au moins deux périodes d'affichage vide (512, 513) dans la même ligne de balayage, au moins deux des périodes de traitement de pixels et dans les périodes d'affichage vide (511, 514) entre deux lignes de balayage, et le circuit de commande détecte le signal de détection (SS) provenant du capteur tactile (230) dans au moins deux périodes d'affichage vide (512, 513) dans la même ligne de balayage, au moins deux des périodes de traitement de pixels et dans les périodes d'affichage vide (511, 514) entre deux lignes de balayage.

3. Dispositif électronique selon la revendication1 ou 2, dans lequel le circuit de commande (201) comprend en outre :
un circuit de détection (220) couplé au capteur tactile (230) et agencé pour déterminer lequel du premier mode (500) et du deuxième mode (700, 800, 900) doit commander le capteur tactile (230), et agencé pour détecter le signal de détection (SS) provenant du capteur tactile (230) ; et
un circuit de commande (250) couplé au circuit de détection (220), au module d'affichage (240) et au capteur tactile (230) et agencé pour appliquer le signal de commande d'affichage (DSD) pour commander le module d'affichage (240) et appliquer le signal de commande tactile (DST) pour commander le capteur tactile (230) avec le mode déterminé ; et dans lequel lorsque le circuit de détection (220) détermine lequeldu premier mode (500) et du deuxième mode (700, 800, 900) doit commander le capteur tactile (230), le circuit de détection (220) est agencé pour donner instruction au circuit de commande (250) de passer dans le mode déterminé pour commander le capteur tactile (230), à partir de l'autre mode.

4. Dispositif électronique selon l'une quelconque des revendications 1 à 3, dans lequel le capteur tactile (230) comprend en outre une pluralité d'éléments de détection et le circuit de commande (201) est agencé pour appliquer le signal de commande tactile (DST) pour charger les éléments de détection avec l'un du premier mode (500) et du deuxième mode (700, 800, 900), dans lequel lorsque le circuit de commande (201) applique de signal de commande tactile (DST) pour charger les éléments de détection avec le premier mode (500), le signal de commande tactile (DST) charge chacun des éléments de détection pendant une première période de temps de charge ; et lorsque le circuit de commande (201) applique le signal de commande tactile (DST) pour charger les éléments de détection avec le deuxième mode (700, 800, 900), le signal de commande tactile (DST) charge au moins l'un des éléments de détection pendant une deuxième période de temps de charge ; et
dans lequel la détermination consiste à déterminer si un niveau de charge, qui est déterminé sur la base du signal de détection détecté (SS), d'au moins l'un des éléments de détection est inférieur à un niveau de charge prédéterminé ; dans lequel lorsqu'il est déterminé que le niveau de charge n'est pas inférieur au niveau de charge prédéterminé, le circuit de commande (201) est agencé pour commander le capteur tactile (230) avec le premier mode (500) ; et dans lequel lorsqu'il est déterminé que le niveau de charge est inférieur au niveau de charge prédéterminé, le circuit de commande (201) est agencé pour commander le capteur tactile (230) avec le deuxième mode (700, 800, 900).

5. Dispositif électronique selon l'une quelconque des revendications 1 à 4, dans lequel le capteur tactile (230) comprend en outre une pluralité d'éléments de détection et le circuit de commande (201) est agencé pour appliquer le signal de commande tactile (DST) pour charger les éléments de détection avec l'un du premier mode (500) et du deuxième mode (700, 800, 900), dans lequel lorsque le circuit de commande (201) applique le signal de commande tactile (DST) pour charger les éléments de détection avec le premier mode (500), le signal de commande tactile (DST) charge chacun des éléments de détection avec une première tension de charge ; et lorsque le circuit de commande (201) applique le signal de commande tactile pour charger les éléments de détection avec le deuxième mode (700, 800, 900), le signal de commande tactile (DST) charge au moins l'un des éléments de détection pendant une deuxième période de temps de charge avec une deuxième tension de charge.

6. Dispositif électronique selon l'une quelconque des revendications 1 à 5, dans lequel le module d'affichage (240) comprend en outre une pluralité de lignes de balayage connectées à la pluralité de pixels ou de sous-pixels, et le circuit de commande (201) est agencé pour appliquer le signal de commande d'affichage (DST) à chacune des lignes de balayage sur la base d'un signal de synchronisation horizontale (HSYNC) ; et dans lequel lorsque le circuit de commande (201) détermine le mode pour commander le capteur tactile (230), au moins l'une des périodes vides est prolongée et le circuit de détection (220) donne instruction au circuit de commande (250) d'appliquer le signal de commande tactile (DST) dans la période vide prolongée pour commander le capteur tactile (230).

7. Dispositif électronique selon l'une quelconque des revendications 1 à 6, dans lequel le circuit de commande (201) comprend en outre :
un circuit de détection (220) couplé au capteur tactile (230) et agencé pour détecter le signal de détection (SS) provenant du capteur tactile (230) ;
un module de traitement (210) couplé au circuit de détection (220) et agencé pour déterminer lequel du premier mode (500) et du deuxième mode (700, 800, 900) doit commander le capteur tactile (230) ; et
un circuit de commande (250) couplé au circuit de détection (220) et au module de traitement (210), au module d'affichage (240) et au capteur tactile (230) et agencé pour appliquer le signal de commande d'affichage (DSD) pour commander le module d'affichage (240) et pour appliquer le signal de commande tactile (DST) pour commander le capteur tactile (230) avec le mode déterminé ; et
dans lequel la détermination est destinée à ce que le module de traitement (210) détermine si une image à afficher sur le module d'affichage (240) provoque un niveau de bruit supérieur à un niveau prédéterminé pour le capteur tactile (230) ; dans lequel lorsque le module de traitement (210) détermine que l'image à afficher sur le module d'affichage (240) provoque un niveau de bruit supérieur au niveau prédéterminé, le module de traitement (210) est agencé pour déterminer d'utiliser le premier mode (500) pour que le circuit de commande (250) commande le capteur tactile (230) ; et dans lequel lorsque le module de traitement (210) détermine que l'image à afficher sur le module d'affichage (240) ne provoque pas un niveau de bruit supérieur au niveau prédéterminé, le module de traitement (210) est agencé pour déterminer d'utiliser le deuxième mode (700, 800, 900) pour que le circuit de commande (250) commande le capteur tactile (230).

8. Procédé pour commander un capteur tactile (230), qui est intégré dans un module d'affichage (240), comportant une pluralité de pixels ou de sous-pixels, dans un dispositif électronique (200), comprenant :
déterminer (420) l'un d'un premier mode (500) et d'un deuxième mode (700, 800, 900) pour commander le capteur tactile (230) sur la base d'une détermination pour savoir si le signal de détection (SS) a un niveau de bruit supérieur à un niveau prédéterminé ;
commander (422) le capteur tactile (230) par un signal de commande tactile (DST) avec le premier mode (500) lorsqu'il est déterminé que le signal de détection (SS) a un niveau de bruit supérieur au niveau prédéterminé, et commander (422) le capteur tactile (230) par un signal de commande tactile (DST) avec le deuxième mode (800, 900) lorsqu'il est déterminé que le signal de détection (SS) n'a pas un niveau de bruit supérieur au niveau prédéterminé ; et
détecter (424) un signal de détection (SS) provenant du capteur tactile (230) lorsque le capteur tactile (230) est commandé par le signal de commande tactile (DST),
dans lequel les pixels ou les sous-pixels sont commandés par un signal de commande d'affichage (DSD) pendant une pluralité de périodes de traitement de pixels, et les pixels ou les sous-pixels ne sont pas commandés dans une pluralité de périodes d'affichage vide (511-514), dans lequel une période d'affichage comprend la pluralité de périodes de traitement de pixels, pendant lesquelles les pixels ou les sous-pixels sont commandés, et la pluralité de périodes d'affichage vide, pendant lesquelles aucun pixel ou sous-pixel n'est commandé, et lorsque le capteur tactile (230) est commandé par le signal de commande tactile (DST) avec le premier mode (500), le signal de commande tactile (DST) est appliqué au capteur tactile (230) seulement dans les périodes d'affichage vide (511, 514) entre deux lignes d'affichage, et le signal de détection (SS) provenant du capteur tactile (230) est détecté seulement dans les périodes d'affichage vide (511, 514) entre deux lignes de balayage, dans lequel une période d'affichage vide entre deux lignes de balayage signifie une période d'affichage vide entre la période de traitement de pixel du dernier pixel d'une ligne de balayage et la période de traitement de pixel du premier pixel de la ligne de balayage suivante, et lorsque le capteur tactile (230) est commandé par le signal de commande tactile (DST) avec le deuxième mode (700, 800, 900), le signal de commande tactile (DST) est appliqué au capteur tactile (230) dans au moins deux périodes d'affichage vide (512, 513) dans la même ligne de balayage et dans les périodes d'affichage vide (511, 514) entre deux lignes de balayage, et le signal de détection (SS) provenant du capteur tactile (230) est détecté dans au moins deux périodes d'affichage vide (512, 513) dans la même ligne de balayage et dans les périodes d'affichage vide (511, 514) entre deux lignes de balayage.

9. Procédé selon la revendication 8, dans lequel lorsque le capteur tactile (230) est commandé par le signal de commande tactile (DST) avec le deuxième mode (800, 900), le signal de commande tactile (DST) est appliqué au capteur tactile (230) dans au moins deux périodes d'affichage vide (512, 513) dans la même ligne de balayage, au moins deux des périodes de traitement de pixels et dans les périodes d'affichage vide (511, 514) entre deux lignes de balayage,et le signal de détection (SS) provenant du capteur tactile (230) est détecté dans au moins deux périodes d'affichage vide (512, 513) dans la même ligne de balayage, au moins deux des périodes de traitement de pixels et dans les périodes d'affichage vide (511, 514) entre deux lignes de balayage.
